# EUROPÄISCHE PATENTANMELDUNG

(11) **EP 2 562 677 A1**
(43) Veröffentlichungstag der Anmeldung: **27.02.2013**
(21) Anmeldenummer: 12004289.0
(22) Anmeldetag: 05.06.2012
(51) Int. Cl.: G06K 7/00

(54) **Metalldeckel für einen Micro-SIM-Kartenleser sowie Micro-SIM-Kartenleser**

(30) Priorität: 26.08.2011 DE 102011111731
(71) Anmelder: Amphenol-Tuchel Electronics GmbH, 74080 Heilbronnn (DE)
(72) Erfinder: Braun, Gerhard, 74626 Bretzfeld-Bitzfeld (DE); Stolz, Joachim, 74354 Besigheim (DE)

(57) **Zusammenfassung**

Die Erfindung betrifft Metalldeckel ausgebildet für einen Micro-SIM-Kartenleser zur Aufnahme einer Micro-SIM-Karte, wobei der Metalldeckel ausgebildet ist aus einem im wesentlichen flachen Deckelblech mit einer Deckeloberseite und einer Deckelunterseite und wenigstens zwei vom Deckelblech ausgebildete Seitenwände, wobei die Seitenwände einen Führungswandabschnitt zur Führung einer einzuschiebenden Micro-SIM-Karte ausbilden und einen zum Führungswandabschnitt seitlich versetzter Seitenwandabschnitt, welcher über zwei Biegungen unter den Biegewinkeln α1 und a2 mit dem Führungswandabschnitt verbunden ist.

## Beschreibung

Die Erfindung bezieht sich auf einen Metalldeckel für einen Micro-SIM-Kartenleser zur Aufnahme einer Micro-SIM-Karte sowie auf einen Micro-SIM-Kartenleser.

Im Stand der Technik sind bereits Kartenleser für unterschiedliche Kartenformate mit metallischem Deckel bekannt, welche entweder schwenkbar am Kontaktträger und zwar an einem Kunststoffträger gelagert sind oder fest mit dem Kontaktträger verbunden werden.

So ist aus der DE 10 2007 031 047 A1 beispielsweise ein Kartenleser bekannt, für eine elektronische Speicherkarte, insbesondere eine Microkarte, bei dem der Deckel schwenkbar am Kontaktträger über spezielle Lager befestigt ist.

Einen dazu ähnlichen Kartenleser offenbart die DE 10 2007 031 048 A1, bei dem ein Kartenleser offenbart wird mit einem Grundkörper, an dem wahlweise unterschiedlich dimensionierte Kontaktblöcke befestigbar sind und mit einem am Grundkörper schwenkbar und gleltbar gelagerten zur Aufnahme einer Microkarte dienenden Klapp-/Schiebedeckels, welcher einen Metalldeckel darstellt.

Die DE 298 08 678 U1 betrifft einen elektrischen Kartenverbinder für eine Karte mit einer integrierten Schaltung mit Kontakten, um insbesondere die Einführung einer Karte in den Kartenleser zu erleichtern, die dadurch gekennzeichnet ist, dass die Aufnahme der Karte in der Oberseite des Deckels ausgebildet ist und dass die Unterseite der Karte an dem Boden der Aufnahme aufliegt, der wenigstens teilweise ausgeschnitten ist, um den Bereich der Unterseite der Karte, der den Kontaktbereichen gegenüberliegt, frei zu lassen.

Da nicht nur die Kartenleser als solche zunehmend miniaturisiert werden, um immer kleinere elektronische Baugruppen zu erhalten und letztendlich kleinere Applikationen zu ermöglichen, werden in der Zwischenzeit zunehmend auch Kartenformate miniaturisiert.

Die Entwicklung startete bei großen Chip-Karten und Smart-Karten bis hin zu Micro-SD-Karten.

Allen Kartentypen sind besondere Eigenschaften anheim. Dabei haben sich unterschiedliche Kartentypen auch für unterschiedliche Anwendungsfälle entwickelt. Ein typlscher Anwendungsfall für Mobiltelefone ist traditionell die SIM-Karte mit einem definierten Kartenformat. Die SIM-Karte in der vorliegenden Erfindung wird ausschließlich als eine "kleine SIM-Karte" bezeichnet. So genannte SIM-Karten im ID-1-Format. Das sind Karten, die aus einer ID-000-Format herausgebrochen werden und eine Außenabmessung von ca. 25 mm x 15 mm aufweisen.

Vorliegende Erfindung befasst sich allerdings mit Micro-SIM-Karten (3FF-Karten).

Micro-SIM-Karten sind Karten, welche aus dem Mini-SIM-Kartenformat herausgebrochen werden können und deutlich kleiner ausgebildet sind als Mini-SIM-Karten.

Problematisch bei der Verwendung einer Micro-SIM (3FF)-Karte oder im folgenden nur kurz als Micro-SIM-Karte bezeichnet, ist die Tatsache, dass das Kontaktpad und damit der Goldlayer bis an die beiden Seitenkanten der Karte heranreicht.

Folglich besteht das Problem bei der Verwendung solcher Micro-SIM-Karten darin, dass der die Karte aufnehmende Metalldeckel mit der bis zum Rand hinreichenden Kontaktpads kontaktiert wird, was unerwünscht ist, da es zu Kurzschlüssen kommen kann.

Aufgabe der vorliegenden Erfindung ist es daher, ein Micro-SIM-Kartenleser so weiterzubilden, dass die Gefahr von Fehlkontaktierung, insbesondere Kurzschlüssen zwischen dem Kontaktpad der Micro-SIM-Karte und der die Karte aufnehmenden Metalldeckel verhindert wird, ohne den Kartenleser in seiner Bauform wesentlich zu vergrößern.

Anders ausgedrückt ist Aufgabe der vorliegenden Erfindung, einen Micro-SIM-Kartenleser sowie einen Metalldeckel für einen Micro-SIM-Kartenleser bereitzustellen, der miniaturisiert ist, eine möglichst optimale Bauraumausnutzung erreicht und gleichzeitig sicher in Handhabung und Gebrauch ist.

Diese Aufgabe wird gelöst mit den Merkmalen von Anspruch 1 und den Merkmalen von Anspruch 12.

Erfindungsgemäß wird ein speziell ausgebildeter Metalldeckel für einen Micro-SIM-Kartenleser zur Aufnahme einer Micro-SIM-Karte bereitgestellt, wobei der Metalldeckel aus einem im wesentlichen flachen Deckelblech ausgebildet ist mit einer Deckeloberseite und einer Deckelunterseite und dieser wenigstens zwei vom Deckelblech ausgebildete Seitenwände aufweist.

Die Seitenwände sind dabei auf eine besondere Art und Weise ausgebildet und zwar verfügen diese über einen Seitenwandabschnitt und einen Führungswandabschnitt. Die Seitenwände verfügen somit über je einen Führungswandabschnitt zur Führung einer einzuschiebenden Micro-SIM-Karte und einem zum Führungswandabschnitt seitlich versetzten Seitenwandabschnitt, welcher über zwei Biegungen unter den Biegewinkeln α1 und α2 mit dem Führungswandabschnitt verbunden ist.

Hierdurch wird eine Art stufenförmig ausgebildete Seitenwand erzielt. Wesentlich ist dabei, dass der seitlich versetzte Seitenwandabschnitt so nach außen und gegenüber dem Führungswandabschnitt seitlich versetzt angeordnet ist, dass ein Spalt zwischen einer Kartenkante einer eingesetzten Micro-SIM-Karte und dem Seitenabschnitt verbleibt.

In einer vorteilhaften Ausgestaltung verlaufen die beiden Führungswandabschnitte der Seitenwände parallel zueinander und spannen einen Aufnahmeraum für die Micro-SIM-Karte auf, die zwischen den jeweils gegenüberliegend verlaufenden Führungswandabschnitten gehalten und geführt wird. Beim Einschieben einer Micro-SIM-Karte in den erfindungsgemäß ausgebildeten Metalldeckel eines Micro-SIM-Kartenlesers kann auch Im Falle, dass eine der Kartenkanten an der inneren Führungsfläche des Führungswandabschnittes anliegt, gewährleistet werden, dass die Kartenkante im Bereich der Kontaktzonen (Kontaktpads) der Micro-SIM-Karte die Seitenwand des Metalldeckels nicht berühren kann.

In einer vorteilhaften Ausführungsform befindet sich zwischen den Biegungen in den Seitenwänden ein Biegeabschnitt. Der Biegeabschnitt verläuft gegenüber dem Führungswandabschnitt unter einem Winkel α1 und somit schräg zur Orientierung des seitlichen Führungswandabschnittes.

Ferner ist der Biegeabschnitt gegenüber dem Seitenwandabschnitt ebenfalls schräg angeordnet und zwar unter dem Winkel α2. Die Winkel α1 und α2 liegen zwischen 130° und 160°.

In einer besonders vorteilhaften Ausführungsform ist das Winkelmaß der Biegewinkel α1 und α2 identisch, so dass ein Wechselwinkelabschnitt zwischen dem Führungswandabschnitt und dem Seitenwandabschnitt ausgebildet ist.

Auf diese Weise verlaufen die Führungswandabschnitte und Seitenwandabschnitte parallel zueinander.

Ferner wird der erfindungsgemäße Metalldeckel so ausgebildet, dass gegenüberliegende Führungswandabschnitte parallel verlaufen sowie gegenüberliegende Seitenwandabschnitte ebenfalls parallel verlaufen.

Allerdings können die Führungswandabschnitte und Seitenwandabschnitte auch unter einem solchen Winkel angeordnet werden, dass die gleiche, zuvor beschriebene technische Wirkung erzeugt wird.

In einer besonders vorteilhaften Ausführungsform und zwar um Klemmungen der Karte zu verhindern, ist das Deckelblech über wenigstens zwei Biegungen mit dem Führungswandabschnitt verbunden.

Idealerweise beträgt die Summe der Winkelmaße der Biegungen zwischen dem Deckelblech und dem Führungswandabschnitt ein Winkel in etwa von 90°, so dass das Deckelblech im wesentlichen Im rechten Winkel zur Seitenwand bzw. zum Führungswandabschnitt orientiert ist.

Durch die Ausbildung einer solchen nach außen orientierten Auskragung wird verhindert, dass eine Kartenkante einer Micro-SIM-Karte im Bereich zwischen zwei Führungswandabschnitten an der Ecke zwischen Deckelblech und Führungswandabschnitt eingeklemmt wird.

Weitere Vorteile, Ziele und Einzelheiten der Erfindung ergeben sich aus der Beschreibung eines Ausführungsbeispiels anhand der Zeichnungen: Die Zeichnungen zeigen:
Fig. 1 eine perspektivische Ansicht eines Micro-SIM-Kartenlesers;
Fig. 2a eine seitliche Ansicht auf einen Micro-SIM-Kartenleser gemäß Fig. 1 von vorne;
Fig. 2b ein Schnitt durch einen Micro-SIM-Kartenleser gemäß Fig. 2a;
Fig. 3 eine Detailansicht des Metalldeckels im Bereich der Seitenwand;
Fig. 4 ein weiterer Detailausschnitt eines Schnittes durch den Micro-SIM-Kartenleser mit einer eingesetzten Micro-SIM-Karte im Bereich des Übergangs zwischen Deckelblech und Seitenwand;
Fig. 5 eine ähnliche Ansicht gemäß Fig. 4 mit einer alternativen Ausbildung des Übergangs zwischen Deckelblech und Seitenwand;
Fig. 6 zeigt eine Micro-SIM-Karte innerhalb einer Mini-SIM-Karte.

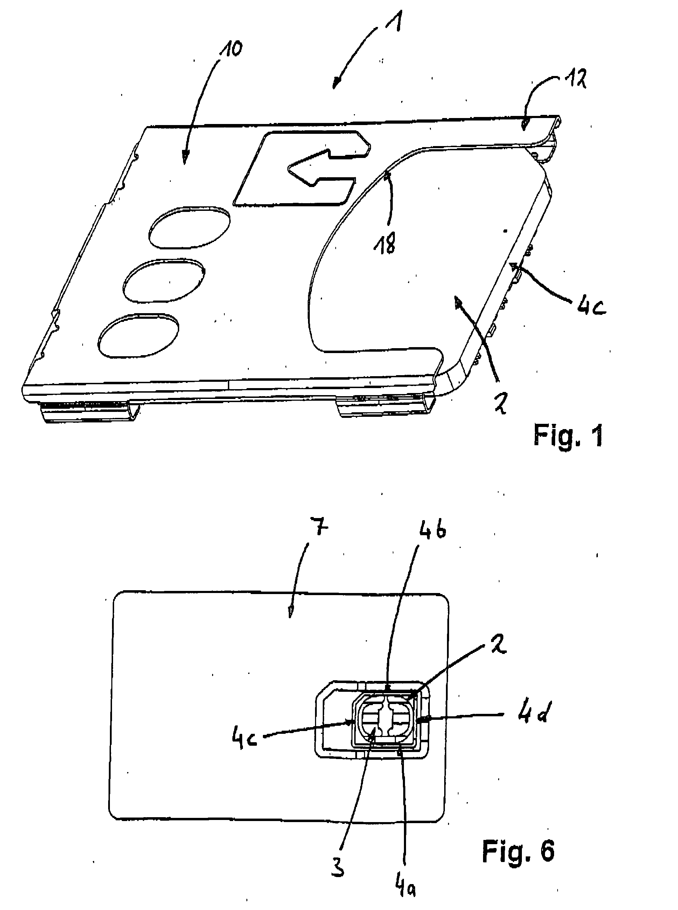

In Fig. 1 ist ein Ausführungsbeispiel eines erfindungsgemäßen Micro-SIM-Kartenlesers 1 mit einem erfindungsgemäßen Metalldeckel 10 gezeigt.

Ferner ist ein Kontaktträger 20 mit Lesekontakten 21 gezeigt.

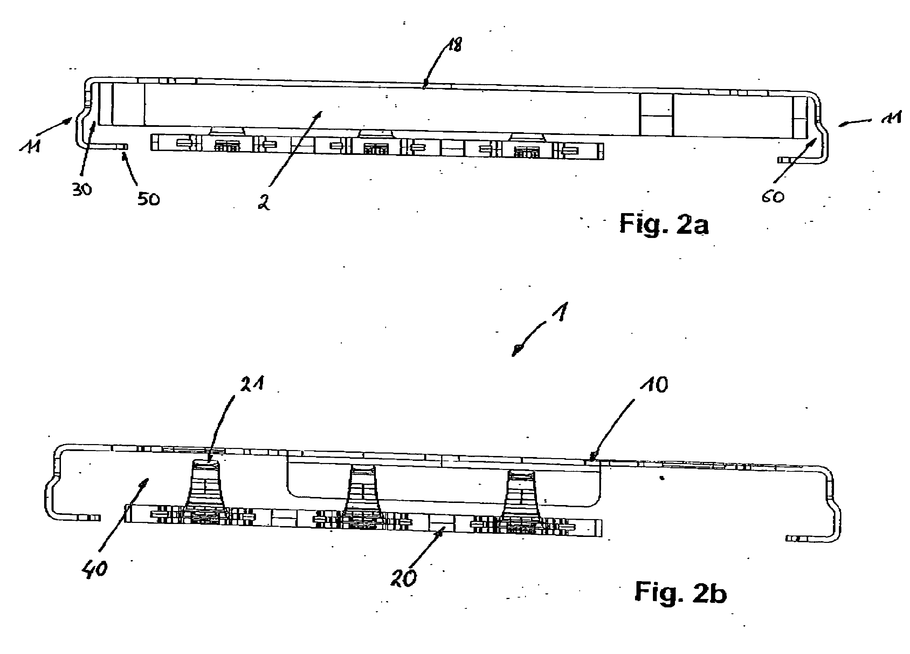

Der Metalldeckel 10 verfügt über ein im wesentlichen ebenes Deckelblech 18 mit einer Deckeloberseite 12 und einer Deckelunterseite 13. Die Deckelunterseite 13 bzw. das Deckelblech 18 mit seiner Deckelunterseite 13 dient zur Anlage der Oberseite einer Micro-SIM-Karte 2, wie diese beispielhaft in Fig. 1 und Fig. 2a in den Micro-SIM-Kartenleser 1 eingeschoben ist.

Die Micro-SIM-Karte 2 verfügt über eine Kartenoberseite 5 und eine Kartenunterseite 6. Die Kartenoberseite 5 und Kartenunterseite 6 sind über Kartenkanten 4a, 4b, 4c, 4d miteinander verbunden. Die Kartenkanten 4a, 4b definieren die Längsseitenkanten der Micro-SIM-Karte 2. Die Kartenkanten 4c, 4d definieren die Stirnseitenkante und die Hinterkante der Micro-SIM-Karte 2.

An der Kartenunterseite 6 befinden sich die Kontaktzonen 3 der Micro-SIM-Karte 2, wie dies in Fig. 6 dargestellt ist.

Die Mini-SIM-Karte ist wiederum als herausbrechbarer Teil einer ID-000-Format-Karte 7.

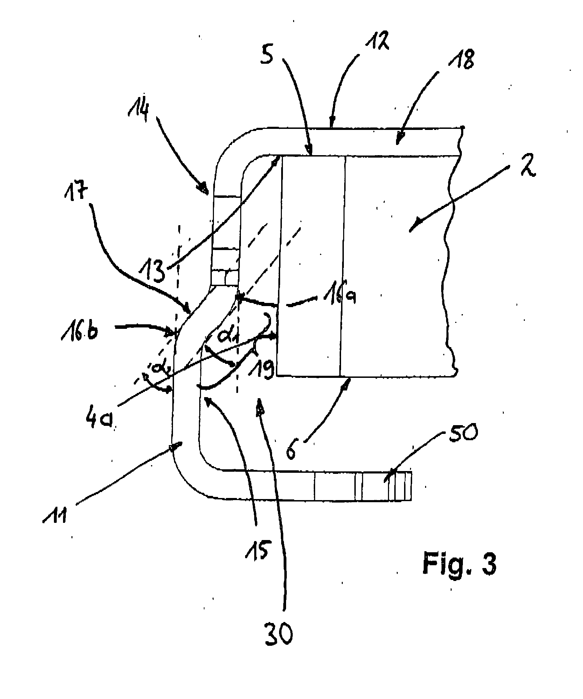

In Fig. 3 ist ein Detail des erfindungsgemäßen Metalldeckels 10 dargestellt.

Das Deckelblech 18 ist verbunden mit der Seitenwand 11. Die Seitenwand 11 umfasst zwei Seitenwandabschnitte und zwar einen Führungswandabschnitt 14 und einen zum Führungswandabschnitt 14 seitlich versetzter Seitenwandabschnitt 15, die über zwei Biegungen 16a, 16b miteinander verbunden sind und zwar unter dem Blegewinkeln α1 und α2.

Zwischen den Biegungen 16a, 16b findet sich ein linearer Biegeabschnitt 17. Der Biegeabschnitt 17 ist gegenüber dem Führungswandabschnitt 14 unter einem Winkel α1 Angeordnet, so dass die erste Biegung einen Biegewinkel α1 aufweist.

Der Biegeabschnitt 17 ist ferner, wie in Fig. 3 gezeigt, gegenüber dem Seltenwandabschnitt 15 ebenfalls um einen Winkel α und zwar den Winkel α2 abgewinkelt.

In dem vorliegenden Ausführungsbeispiel sind die Winkelmaße α1 und α2 identisch ausgebildet, so dass ein Wechselwinkelabschnitt 19 durch den Biegeabschnitt 17 und den Führungswandabschnitt 14 sowie den Seitenwandabschnitt 15 bereitgestellt wird.

Durch die zuvor genannte Ausführung wird sichergestellt, dass die wie in Fig. 2a gezeigte in den Micro-SIM-Kartenleser eingeschobene Micro-SIM-Karte 2 mit ihrer Kartenkante 4a, 4b im Bereich der Kontaktzonen 3 an der Kartenunterseite 6 nicht mit dem Metalldeckel in Kontakt kommen kann. Zwischen dem Seltenwandabschnitt 15 und der Kartenkante 4a, 4b befindet sich durch die erfindungsgemäße Ausprägung des Metalldeckels 10 bzw. der abgestuften Seitenwand 11 immer ein Isolationsspalt 30 oder kurz Spalt 30.

Wird eine Micro-SIM-Karte 2 somit in den von den beiden Führungswandabschnitten 14 und den Seitenwänden 11 aufgespannten Aufnahmeraum 40 eines Micro-SIM-Kartenlesers 1 eingeschoben, so ist auf jeder Seite, insbesondere auf jeder Längsseite, der Micro-SIM-Karte 2 sichergestellt, dass diese nur im Bereich der Führungswandabschnitte 14 mit dem Metalldeckel in Kontakt treten kann oder bei Anlage mit diesem ein Spalt mit dem Seitenwandabschnitt 15 verbleibt.

Der Biegeabschnitt 17 liegt in einer wie hier dargestellten Ausführungsform in etwa in halber Höhe des Metalldeckels 10.

Die Höhe wird dabei definiert durch den Abstand der Deckelauflagen 50 und dem Deckelblech 18. Die Deckelauflagen 50 befinden sich als Umbiegungen der Seitenwände 11 unterhalb der Deckelunterseite 13 des Deckelbleches 18.

Die Deckelauflagen 50 können daher in vorteilhafter Weise dazu genutzt werden, den Deckel auf einer Leiterplatte zu montieren.

Im vorliegenden Beispiel ist die Deckelauflage 50 in einem Winkel von etwa 90° zum Seitenwandabschnitt 15 orientiert.

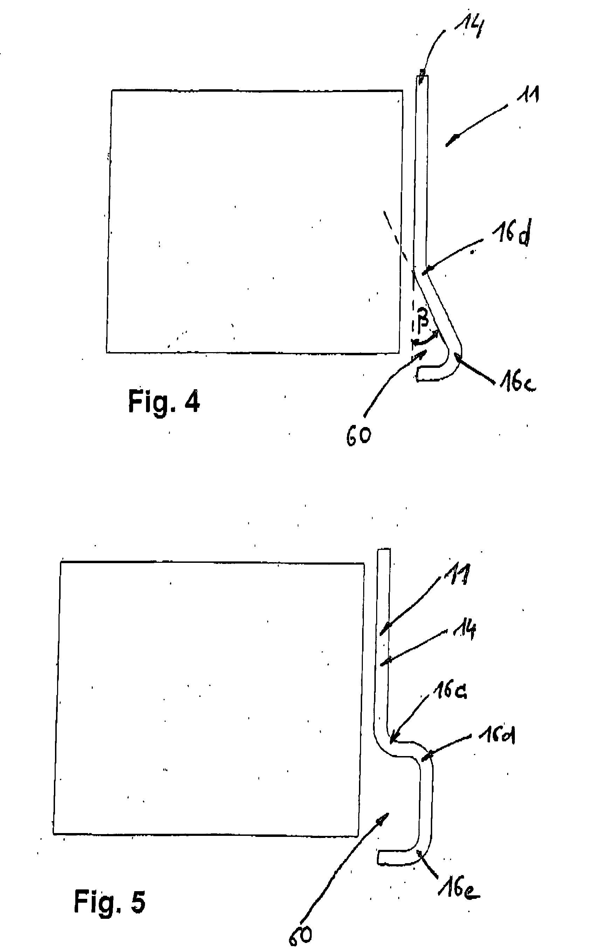

In Fig. 4 und Fig. 5 sind Details weiterer vorteilhafter Ausgestaltungen der vorliegenden Erfindung dargestellt.

In beiden Fällen wird das Deckelblech 18 über wenigstens zwei Biegungen 16c, 16d, 16e mit dem Führungswandabschnitt 14 verbunden.

In Fig. 5 werden drei Biegungen um jeweils einen Winkel von ca. 90° ausgeführt.

Während in Fig. 4 die Biegung 16c als Biegeradius ausgebildet ist, während die Biegung 16d unter einem Winkel β angeordnet ist.

### Bezugszelchenliste

### Metglldeckel für einen Micro-SIM-Kartenleser sowie Micro-SIM-Kartenleser

- 1.: Micro-SIM-Kartenleser
- 2.: Micro-SIM-Karte
- 3.: Kontaktzonen
- 4a, 4b, 4c, 4d: Kartenkanten
- 5.: Kartenoberseite
- 6.: Kartenunterseite
- 7.: ID-000-Karte

- 10.: Metalldeckel
- 11.: Seitenwände
- 12.: Deckeloberseite
- 13.: Deckelunterseite
- 14.: Führungswandabschnitt
- 15.: Seitenwandabschnitt
- 16a, 16b, 16c, 16d, 16e: Biegungen
- 17.: Biegeabschnitt
- 18.: Deckelblech
- 19.: Wechselwinkelabschnitt
- 20.: Kontaktträger
- 21.: Lesekontakte

- 30.: Spalt

- 40.: Aufnahmeraum

- 50.: Deckelauflage

- 60.: Freiraum

Jedenfalls sind die Winkel der Biegungen in Ihrer Summe so auszuwählen, dass ein Winkel von ca. 90° zwischen dem Deckelblech und der Seitenwand gebildet wird.

Hierdurch wird bewerkstelligt, dass ein Freiraum 60 im Aufnahmeraum 40 des Metalldeckels 10 erzielt wird und ein Konflikt mit der Kartekante und ein Verklemmen mit dem innen liegenden Biegeradius, wie in Fig. 2a gezeigt, verhindert werden kann.

Insgesamt weist der erfindungsgemäße Metalldeckel 10 daher mehrere Biegungen 16a, 16b, 16c, 18d, 16e auf, die eine sichere Handhabung einer Micro-SIM-Karte in einem Micro-SIM-Kartenleser 1 gewährleisten.

## Patentansprüche

1. Metalldeckel (10) ausgebildet für einen Micro-SIM-Kartenleser (1) zur Aufnahme einer Micro-SIM-Karte (2), wobei der Metalldeckel (10) ausgebildet ist aus einem im wesentlichen flachen Deckelblech (18) mit einer Deckeloberseite (12) und einer Deckelunterseite (13) und wenigstens zwei vom Deckelblech (18) ausgebildete Seitenwände (11), **dadurch gekennzeichnet, dass** die Seitenwände (11) einen Führungswandabschnitt (14) zur Führung einer einzuschiebenden Micro-SIM-Karte (2) ausbilden und einen zum Führungswandabschnitt (14) seitlich versetzter Seitenwandabschnitt (15), welcher über zwei Biegungen (16a, 16b) unter den Biegewinkeln α1 und α2 mit dem Führungswandabschnitt (14) verbunden ist.

2. Metalldeckel (10) gemäß Anspruch 1, **dadurch gekennzeichnet, dass** zwischen den Biegungen (16a, 16b) ein im wesentlichen linearer Biegabschnitt (17) verläuft.

3. Metalldeckel (10) gemäß Anspruch 2, **dadurch gekennzeichnet, dass** der Blegeabschnitt (17) gegenüber dem Führungswandabschnitt (14) in seiner Orientierung schräg verläuft.

4. Metalldeckel (10) für einen Micro-SIM-Kartenleser (1) gemäß Anspruch 2 oder 3, **dadurch gekennzeichnet, dass** der Biegabschnitt (17) gegenüber dem Führungswandabschnitt (14) schräg orientiert angeordnet ist und zwar unter dem Winkel α1.

5. Metalldeckel (10) ausgebildet für einen Micro-SIM-Kartenleser (1) gemäß einem der vorhergehenden Ansprüche, **dadurch gekennzeichnet, dass** der Winkel α1 zwischen 130° und 160° beträgt.

6. Metalldeckel (10) ausgebildet für einen Micro-SIM-Kartenleser (1) gemäß einem der vorhergehenden Ansprüche, **dadurch gekennzeichnet, dass** der Winkel α2 zwischen 130° und 160° beträgt.

7. Metalldeckel (10) ausgebildet für einen Micro-SIM-Kartenleser (1) gemäß einem der vorhergehenden Ansprüche, **dadurch gekennzeichnet, dass** die Biegewinkel α1 und α2 von ihrem Winkelmaß identisch ausgebildet sind.

8. Metalldeckel (10) ausgebildet für einen Micro-SIM-Kartenleser (1) gemäß einem der vorhergehenden Ansprüche, **dadurch gekennzeichnet, dass** sich gegenüberliegende Führungswandabschnitte (14) zueinander parallel verlaufen.

9. Metalldeckel (10) ausgebildet für einen Micro-SIM-Kartenleser (1) gemäß einem der vorhergehenden Ansprüche, **dadurch gekennzeichnet, dass** sich gegenüberliegende Seitenwandabschnitte (15) parallel verlaufen.

10. Metalldeckel (10) ausgebildet für einen Micro-SIM-Kartenleser (1) gemäß einem der vorhergehenden Ansprüche, **dadurch gekennzeichnet, dass** das Deckelblech (18) über wenigstens zwei Biegungen (16c, 16d, 16e) mit dem Führungswandabschnitt (14) verbunden ist.

11. Metalldeckel (10) ausgebildet für einen Micro-SIM-Kartenleser (1) gemäß Anspruch 10, **dadurch gekennzeichnet, dass** die Blegungen (16c, 16d, 16e) in Summe einem Winkelmaß von ca. 90° entsprechen und somit das Deckelblech (18) im rechten Winkel zur Seitenwand (11) orientiert angeordnet ist.

12. Micro-SIM-Kartenleser (1) zur Aufnahme einer Micro-SIM-Karte (2) umfassend einen Kontaktträger (20) mit Lesekontakten (21) und einem Metalldeckel (10) gemäß einem der Ansprüche 1 bis 11.
